**Europäisches Patentamt**

**European Patent Office**

**Office européen des brevets**

(11) Veröffentlichungsnummer : **0 421 024 B1**

(12)

# EUROPÄISCHE PATENTSCHRIFT

(45) Veröffentlichungstag der Patentschrift :
**09.12.92 Patentblatt 92/50**

(51) Int. Cl.$^5$ : **G01D 5/34**

(21) Anmeldenummer : **89118633.0**

(22) Anmeldetag : **06.10.89**

(54) Lichtelektrische Positionsmesseinrichtung.

(43) Veröffentlichungstag der Anmeldung :
**10.04.91 Patentblatt 91/15**

(45) Bekanntmachung des Hinweises auf die
Patenterteilung :
**09.12.92 Patentblatt 92/50**

(84) Benannte Vertragsstaaten :
**AT CH DE FR GB IT LI**

(56) Entgegenhaltungen :
**DE-C- 3 245 914**
**US-A- 3 030 513**

(56) Entgegenhaltungen :
**US-A- 3 932 039**
**PATENT ABSTRACTS OF JAPAN, Band 013,**
**Nr. 412 (P-932), 12. September 1989; & JP-A-1**
**152 333 (TOSHIBA GLASS CO., LTD)14-06-1989**

(73) Patentinhaber : **Dr. Johannes Heidenhain**
**GmbH**
**Dr.-Johannes-Heidenhain-Strasse 5 Postfach**
**1260**
**W-8225 Traunreut (DE)**

(72) Erfinder : **Hennig, Helmut, Ing. grad.**
**Kampenwandstrasse 29**
**W-8225 Traunreut (DE)**

## Beschreibung

Die Erfindung betrifft eine lichtelektrische Positionsmeßeinrichtung gemäß dem Oberbegriff des Anspruchs 1.

Derartige lichtelektrische Positionsmeßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Bei einer solchen Positionsmeßeinrichtung können die an der wenigstens einen Referenzmarke erzeugten Referenzsignale auf verschiedene Weise verwertet werden, z.B. zum Reproduzieren einer Nullposition im Zähler, zum Anfahren einer bestimmten Position zu Beginn einer Messung oder zur Kontrolle von Störimpulsen sowie zur Beaufschlagung einer nachgeschalteten Steuereinrichtung.

Aus der DE-PS 24 16 212 ist eine Positionsmeßeinrichtung bekannt, bei der ein Teilungsträger eine inkrementale Teilung und auf einer gesonderten Referenzmarkenspur identische Referenzmarken aufweist, die der inkrementalen Teilung absolut zugeordnet sind. Der Absolutwert jeder Referenzmarke bestimmt sich aus ihrem jeweiligen spezifischen Abstand zu einer benachbarten Referenzmarke; diese unterschiedlichen Abstände werden durch die Abtastung der inkrementalen Teilung ermittelt. Bei dieser Meßeinrichtung ist jedoch eine gesonderte Referenzmarkenspur erforderlich.

In der DE-PS 32 45 914 ist eine Positionsmeßeinrichtung beschrieben, bei der ein Teilungsträger eine inkrementale Teilung und dieser Teilung absolut zugeordnete identische Referenzmarken in zueinander festgelegten Abständen in einer parallel zur Teilung verlaufenden Referenzmarkenspur aufweist. Zur Auswahl wenigstens einer für die Messung benötigten Referenzmarke ist den Referenzmarken eine Spur mit wenigstens einer elektrisch aufgebrachten Auswahlinformation zugeordnet, die von einem Element der Abtasteinheit abgetastet wird, so daß wenigstens eine Referenzmarke ausgewählt und zur Wirkung gebracht werden kann.

Bei dieser Meßeinrichtung sind jedoch zur Auswahl der für die Messung benötigten Referenzmarken eine gesonderte Spur mit den zugehörigen Auswahlinformationen auf dem Teilungsträger sowie ein zusätzliches Element in der Abtasteinheit zur Abtastung dieser Auswahlinformation erforderlich.

Der Erfindung liegt die Aufgabe zugrunde, bei einer Positionsmeßeinrichtung der genannten Gattung deren Aufbau sowie die Gewinnung wenigstens eines Referenzsignals wesentlich zu vereinfachen.

Diese Aufgabe wird erfindungsgemäß durch die kennzeichnenden Merkmale des Anspruchs 1 gelöst.

Die mit der Erfindung erzielten Vorteile bestehen insbesondere darin, daß zum einen die abstandscodierten Referenzmarken durch die inkrementale Teilung selbst gebildet werden, so daß eine gesonderte Referenzmarkenspur entfallen kann, und zum anderen zur Auswahl der für die Messung benötigten wenigstens einen Referenzmarke keine zusätzlichen Elemente erforderlich sind, so daß sich eine besonders einfach aufgebaute und preiswerte Positionsmeßeinrichtung ergibt.

Vorteilhafte Ausbildungen der Erfindung entnimmt man den Unteransprüchen.

Ausführungsbeispiele der Erfindung werden anhand der Zeichnung näher erläutert.

Es zeigen

Figur 1 eine lichtelektrische Längenmeßeinrichtung in einer schematischen Seitenansicht;

Figur 2 einen ersten Teilungsträger, eine erste Abtastplatte und eine erste Photoelementenplatine in einer Draufsicht;

Figur 3 einen zweiten Teilungsträger, eine zweite Abtastplatte und eine zweite Photoelementenplatine in einer Draufsicht.

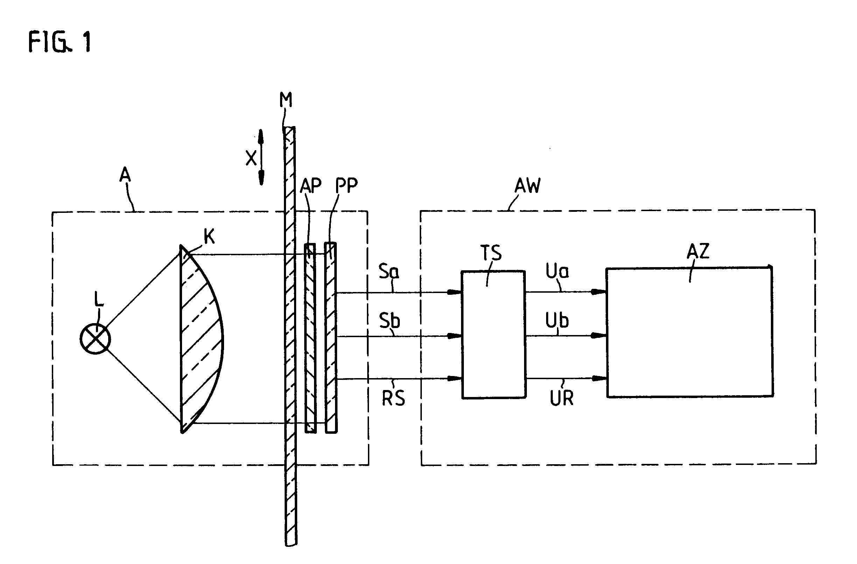

In Figur 1 ist eine lichtelektrische Längenmeßeinrichtung in einer schematischen Seitenansicht zur Messung der Relativlage zweier nicht dargestellter Objekte, beispielsweise zweier Maschinenteile einer Bearbeitungsmaschine gezeigt, bei der ein Teilungsträger M von einer Abtasteinheit A abgetastet wird, die jeweils mit einem der beiden Objekte verbunden sind. Die Abtasteinheit A enthält eine Lichtquelle L, ein Kondensor K, eine Abtastplatte AP sowie eine Photoelementenplatine PP.

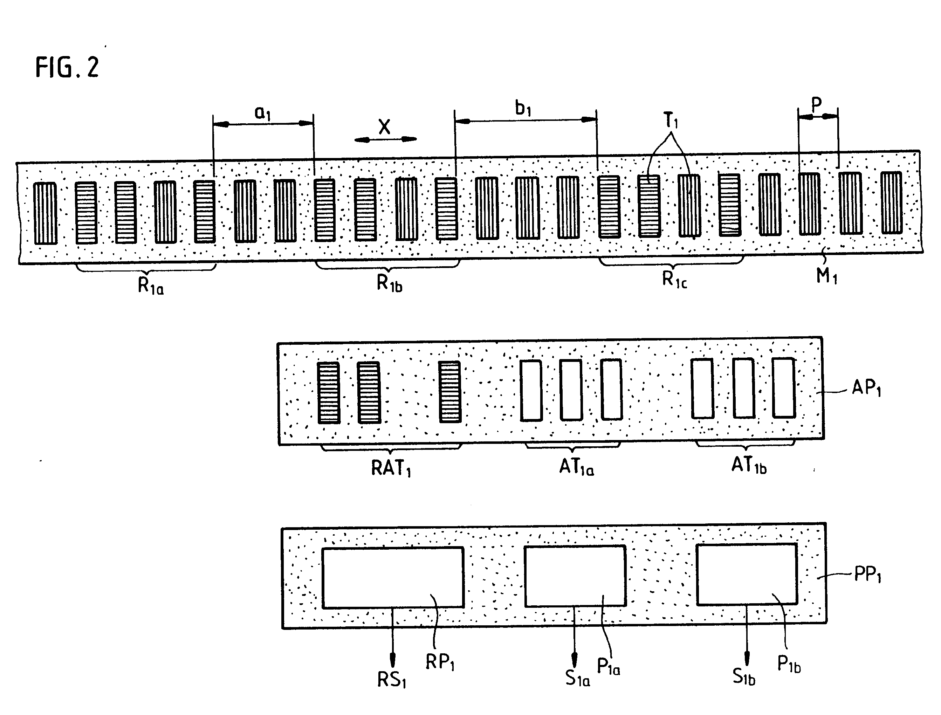

In Figur 2 sind ein erster Teilungsträger $M_1$, eine erste Abtastplatte $AP_1$ und eine erste Photoelementenplatine $PP_1$ in einer Draufsicht dargestellt. Der Maßstab $M_1$ weist eine inkrementale Teilung $T_1$ mit einer Teilungsperiode P auf; jede Teilungsperiode P besteht aus einem lichtdurchlässigen Streifen und aus einem lichtundurchlässigen Streifen, die in Meßrichtung X alternierend aufeinander folgen und quer zur Meßrichtung X verlaufen. Zur Abtastung der Teilung $T_1$ im Durchlicht enthält die Abtastplatte $AP_1$ zwei Abtastteilungen $AT_{1a}$, $AT_{1b}$, die die gleiche Teilungsperiode P wie die Teilung $T_1$ aufweisen und mit dieser identisch sind, aber in Meßrichtung X um ein Viertel der Teilungsperiode P gegeneinander versetzt sind. Zur Abtastung der Teilung $T_1$ sind ferner auf der Photoelementenplatine $PP_1$ zwei Photoelemente $P_{1a}$, $P_{1b}$ aufgebracht, die den beiden Abtastteilungen $AT_{1a}$, $AT_{1b}$ jeweils zugeordnet sind.

Bei der Meßbewegung der Abtasteinheit A bezüglich des Teilungsträgers $M_1$ werden die von der Lichtquelle L ausgehenden, vom Kondensor K parallel gerichteten Lichtstrahlen durch die Teilung $T_1$ und die beiden Abtastteilungen $AT_{1a}$, $AT_{1b}$ moduliert und fallen auf die beiden Photoelemente $P_{1a}$, $P_{1b}$, die zwei periodische Abtastsignale $S_{1a}$, $S_{1b}$ erzeugen, die einer Triggerstufe TS in einer Auswerteeinrichtung AW zur Triggerung zugeleitet werden (Figur 1). Die Triggerstufe TS erzeugt aus den beiden Abtastsignalen $S_{1a}$, $S_{1b}$ zwei Rechtecksignale $U_a$, $U_b$, die in der Auswerteeinrichtung AW eine Anzeigeeinheit AZ mit einem Richtungsdiskriminator und einem Zähler zur digitalen Anzeige der Meßwerte für die Relativlage der beiden Objekte beaufschlagen. Aufgrund des gegenseitigen Versatzes der beiden Abtastteilungen $AT_{1a}$, $AT_{1b}$ um ein Viertel der Teilungsperiode P weisen die beiden Rechtecksignale $U_a$, $U_b$ einen gegenseitigen Phasenversatz von 90° auf, der eine Diskriminierung der Meßrichtung X erlaubt.

In der Teilung $T_1$ sind mehrere identische Referenzmarken enthalten, von denen drei Referenzmarken $R_{1a}$, $R_{1b}$, $R_{1c}$ in der Figur 2 mit der gleichen unregelmäßigen Streifenverteilung dargestellt sind. Da die lichtdurchlässigen Streifen der drei Referenzmarken $R_{1a}$, $R_{1b}$, $R_{1c}$ aus bestimmten lichtdurchlässigen Streifen der inkrementalen Teilung $T_1$ gebildet werden, besitzen zu ihrer Unterscheidung die lichtdurchlässigen Streifen der drei Referenzmarken $R_{1a}$, $R_{1b}$, $R_{1c}$ und die nicht für die drei Referenzmarken $R_{1a}$, $R_{1b}$, $R_{1c}$ benutzten lichtdurchlässigen Streifen der inkrementalen Teilung $T_1$ unterschiedliche Polarisationswirkungen. In Figur 2 weisen die lichtdurchlässigen Streifen der drei Referenzmarken $R_{1a}$, $R_{1b}$, $R_{1c}$ ein Strichmuster zur Bewirkung einer Querpolarisation der Lichtstrahlen und die lichtdurchlässigen Streifen der inkrementalen Teilung $T_1$ ein Strichmuster zur Bewirkung einer Längspolarisation der Lichtstrahlen auf. Die wenigstens eine Referenzmarke $R_{1a}$, $R_{1b}$, $R_{1c}$ ist somit als Polarisator mit vorgebbarer Polarisationswirkung ausgebildet und durch diese vorgebbare Polarisationswirkung detektierbar; das Strichmuster stellt den Polarisator dar.

Zur Abtastung dieser drei Referenzmarken $R_{1a}$, $R_{1b}$, $R_{1c}$ enthält die Abtastplatte $AP_1$ eine Referenzabtastteilung $RAT_1$, deren Streifen mit den Streifen der drei Referenzmarken $R_{1a}$, $R_{1b}$, $R_{1c}$ identisch sind und ein Strichmuster zur Bewirkung einer Querpolarisation der Lichtstrahlen aufweisen; der Referenzabtastteilung $RAT_1$ ist auf der Photoelementenplatine $PP_1$ ein Referenzphotoelement $RP_1$ zugeordnet.

Während der Meßbewegung der Abtasteinheit A bezüglich der inkrementalen Teilung $T_1$ erzeugen die beiden Photoelemente $P_{1a}$, $P_{1b}$ sowohl bei der Abtastung der längspolarisierenden Streifen der Teilung $T_1$ als auch bei der Abtastung der querpolarisierenden Streifen der drei Referenzmarken $R_{1a}$, $R_{1b}$, $R_{1c}$ durch die nichtpolarisierenden Streifen der beiden Abtastteilungen $AT_{1a}$, $AT_{1b}$ die beiden periodischen Abtastsignale $S_{1a}$, $S_{1b}$ zur Gewinnung der Meßwerte. Demgegenüber erzeugt das Referenzphotoelement $RP_1$ nur bei der Abtastung der querpolarisierenden Streifen der drei Referenzmarken $R_{1a}$, $R_{1b}$, $R_{1c}$, nicht jedoch bei der Abtastung der längspolarisierenden Streifen der Teilung $T_1$ durch die querpolarisierenden Streifen der Referenzabtastteilung $RAT_1$ jeweils das Referenzsignal $RS_1$, das nach der Triggerung durch die Triggerstufe TS als Referenzimpuls $UR_1$ den Zähler der Anzeigeeinheit AZ beaufschlagt.

Die Lagen der drei identischen Referenzmarken $R_{1a}$, $R_{1b}$, $R_{1c}$ sind der inkrementalen Teilung $T_1$ fest zugeordnet. Zur Bestimmung des Absolutwertes der Lage der jeweiligen Referenzmarke $R_{1a}$, $R_{1b}$, $R_{1c}$ beim Auftreten eines Referenzsignals $RS_1$ werden die unterschiedlichen Abstände $a_1$, $b_1$ zwischen den drei Referenzmarken $R_{1a}$, $R_{1b}$, $R_{1c}$ mittels der Abtastung der inkrementalen Teilung $T_1$ ermittelt. Diese Referenzsignale $RS_1$ dienen einmal zur Kontrolle des Zählerstandes des Zählers bei einer Messung bzw. zur Korrektur dieses Zählerstandes bei Fehlzählungen der Inkremente der Teilung $T_1$ und zum anderen zur Wiedergewinnung einer Bezugsposition nach dem Verlust des momentanen Meßwertes infolge eines Stromausfalls.

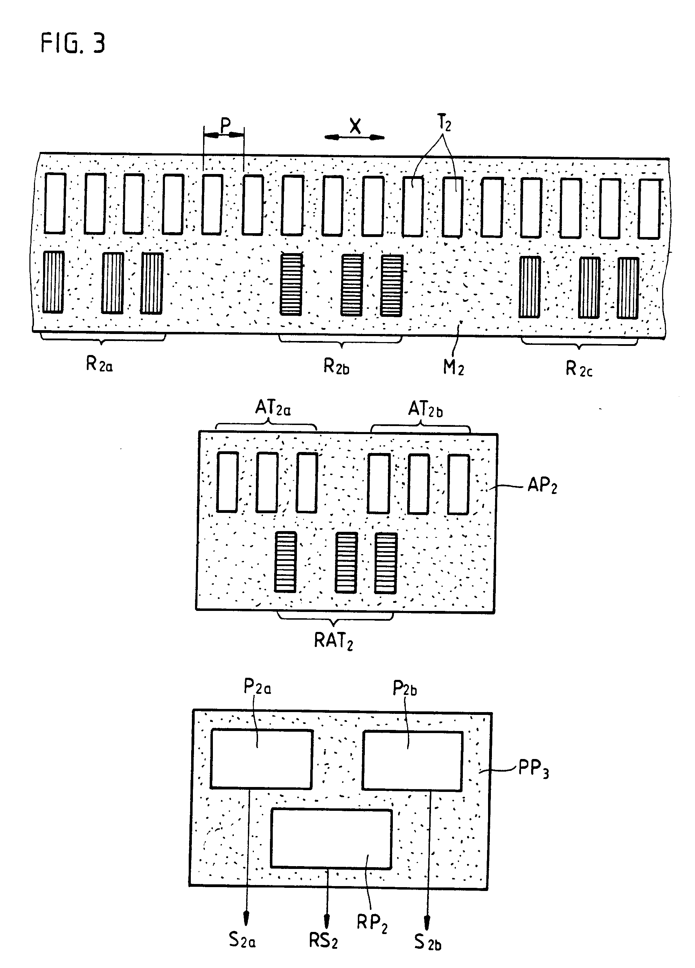

In Figur 3 sind ein zweiter Teilungsträger $M_2$, eine zweite Abtastplatte $AP_2$ sowie eine zweite Photoelementenplatine $PP_2$ in einer Draufsicht dargestellt. Der Maßstab $M_2$ weist eine inkrementale Teilung $T_2$ mit einer Teilungsperiode P auf; jede Teilungsperiode P besteht aus einem lichtdurchlässigen Streifen und aus einem lichtundurchlässigen Streifen, die in Meßrichtung X alternierend aufeinander folgen und quer zur Meßrichtung X verlaufen. Zur Abtastung der Teilung $T_2$ im Durchlicht enthält die Abtastplatte $AP_2$ zwei Abtastteilungen $AT_{2a}$, $AT_{2b}$, die die gleiche Teilungsperiode P wie die Teilung $T_2$ aufweisen und mit dieser identisch sind, aber in Meßrichtung X um ein Viertel der Teilungsperiode P gegeneinander versetzt sind. Zur Abtastung der Teilung $T_2$ sind ferner auf der Photoelementenplatine $PP_2$ zwei Photoelemente $P_{2a}$, $P_{2b}$ aufgebracht, die den beiden Abtastteilungen $AT_{2a}$, $AT_{2b}$ jeweils zugeordnet sind.

Bei der Meßbewegung der Abtasteinheit A bezüglich des Teilungsträgers $M_2$ erzeugen die beiden Photoelemente $P_{2a}$, $P_{2b}$ zwei periodische Abtastsignale $S_{2a}$, $S_{2b}$, die der Auswerteeinrichtung AW zur Gewinnung der Meßwerte und zur Diskriminierung der Meßrichtung X in der vorbeschriebenen Weise zugeführt werden.

Parallel zur inkrementalen Teilung $T_2$ ist eine Referenzmarkenspur mit mehreren identischen Referenzmarken vorgesehen, von denen drei Referenzmarken $R_{2a}$, $R_{2b}$, $R_{2c}$ in der Figur 3 mit der gleichen unregelmäßigen Streifenverteilung dargestellt sind. Zur Auswahl der Referenzmarke $R_{2b}$, die zur Wirkung gelangen soll, besitzen die lichtdurchlässigen Streifen der ausgewählten Referenzmarke $R_{2b}$ und die lichtdurchlässigen Streifen der nicht ausgewählten Referenzmarken $R_{2a}$, $R_{2c}$ unterschiedliche Polarisationswirkungen. In Figur 3 weisen die lichtdurchlässigen Streifen der ausgewählten Referenzmarke $R_{2b}$ ein Strichmuster zur Bewirkung einer Querpolarisation der Lichtstrahlen und die lichtdurchlässigen Streifen der nicht ausgewählten Referenzmarken $R_{2a}$, $R_{2c}$

ein Strichmuster zur Bewirkung einer Längspolarisation der Lichtstrahlen auf. Die wenigstens eine ausgewählte Referenzmarke $R_{2b}$ ist somit als Polarisator mit vorgebbarer Polarisationswirkung ausgebildet und durch diese vorgebbare Polarisationswirkung detektierbar; das Strichmuster stellt den Polarisator dar.

Zur Abtastung der ausgewählten Referenzmarke $R_{2b}$ enthält die Abtastplatte $AP_2$ eine Referenzabtastteilung $RAT_2$, deren Streifen mit den Streifen der drei Referenzmarken $R_{2a}$, $R_{2b}$, $R_{2c}$ identisch sind und ein Strichmuster zur Bewirkung einer Querpolarisation der Lichtstrahlen aufweisen; der Referenzabtastteilung $RAT_2$ ist auf der Photoelementenplatine $PP_2$ ein Referenzphotoelement $RP_2$ zugeordnet.

Während der Meßbewegung der Abtasteinheit A bezüglich der inkrementalen Teilung $T_2$ erzeugt das Referenzphotoelement $RP_2$ nur bei der Abtastung der querpolarisierenden Streifen der ausgewählten Referenzmarke $R_{2b}$, nicht jedoch bei der Abtastung der längspolarisierenden Streifen der beiden nicht ausgewählten Referenzmarken $R_{2a}$, $R_{2c}$ durch die querpolarisierenden Streifen der Referenzabtastteilung $RAT_2$ das ausgewählte Referenzsignal $RS_2$, das nach der Triggerung durch die Triggerstufe TS als Referenzimpuls $UR_2$ den Zähler der Anzeigeeinheit AZ beaufschlagt.

Die Lagen der drei identischen Referenzmarken $R_{2a}$, $R_{2b}$, $R_{2c}$ sind der inkrementalen Teilung $T_2$ fest zugeordnet. Die Festlegung einer ausgewählten Referenzmarke $R_{2b}$ für die Nullposition der Messung erfolgt anwenderspezifisch bei der Herstellung des Teilungsträgers $T_2$. Möchte jedoch der Anwender die Referenzmarkenauswahl selber treffen bzw. entsprechend dem jeweiligen Bearbeitungsvorgang verändern, so werden anstelle des polarisierenden Strichmusters die ausgewählte Referenzmarke $R_{2b}$ mit einer querpolarisierenden Folie und die nicht ausgewählten Referenzmarken $R_{2a}$, $R_{2c}$ mit einer längspolarisierenden Folie als Polarisatoren überklebt.

Die Erfindung ist sowohl bei Längenmeßeinrichtungen als auch bei Winkelmeßeinrichtungen mit Erfolg einsetzbar.

**Patentansprüche**

1. Lichtelektrische Positionsmeßeinrichtung zur Messung der Relativlage zweier Objekte, bei der ein mit dem einen Objekt verbundener Teilungsträger (11) eine inkrementale Teilung ($T_1$; $T_2$) und wenigstens eine dieser Teilung ($T_1$; $T_2$) fest zugeordnete Referenzmarke ($R_{1a}$, $R_{1b}$, $R_{1c}$ ; $R_{2b}$) aufweist und bei der eine mit dem anderen Objekt verbundene Abtasteinheit (A) die Teilung ($T_1$; $T_2$) zur Erzeugung von Meßwerten für die Position der beiden Objekte und die wenigstens eine Referenzmarke ($R_{1a}$, $R_{1b}$, $R_{1c}$ ; $R_{2b}$) zur Erzeugung

wenigstens eines Referenzsignals ($RS_1$ ; $RS_2$) für Steuerungszwecke abtastet, dadurch gekennzeichnet, daß die wenigstens eine Referenzmarke ($R_{1a}$, $R_{1b}$, $R_{1c}$; $R_{2b}$) als Polarisator mit vorgebbarer Polarisationswirkung ausgebildet ist und daß die wenigstens eine Referenzmarke ($R_{1a}$, $R_{1b}$, $R_{1c}$; $R_{2b}$) durch diese vorgebbare Polarisationswirkung detektierbar ist.

2. Meßeinrichtung nach Anspruch 1, dadurch gekennzeichnet, daß die Streifen der Referenzmarken ($R_{1a}$, $R_{1b}$, $R_{1c}$) durch die Streifen der inkrementalen Teilung ($T_1$) gebildet sind, daß die Streifen der Referenzmarken ($R_{1a}$, $R_{1b}$, $R_{1c}$) und die Streifen einer Referenzabtastteilung ($RAT_1$), die mit den Referenzmarken ($R_{1a}$, $R_{1b}$, $R_{1c}$) identisch ist, die vorgebbare Polarisationswirkung und die nicht für die Referenzmarken ($R_{1a}$, $R_{1b}$, $R_{1c}$) benutzten Streifen der inkrementalen Teilung ($T_1$) eine andere Polarisationswirkung besitzen.

3. Meßeinrichtung nach Anspruch 1, dadurch gekennzeichnet, daß die Referenzmarken ($R_{2a}$, $R_{2b}$, $R_{2c}$) auf einer zur inkrementalen Teilung ($T_2$) parallel verlaufenden Referenzmarkenspur angeordnet sind, daß die Streifen einer ausgewählten Referenzmarke ($R_{2b}$) und die Streifen einer Referenzabtastteilung ($RAT_2$), die mit den Referenzmarken ($R_{2a}$, $R_{2b}$, $R_{2c}$) identisch ist, die vorgebbare Polarisationswirkung und die Streifen der nicht ausgewählten Referenzmarken ($R_{2a}$, $R_{2c}$) eine andere Polarisationswirkung besitzen.

4. Meßeinrichtung nach den Ansprüchen 2 und 3, dadurch gekennzeichnet, daß der Polarisator jeweils aus einem Strichmuster besteht.

5. Meßeinrichtung nach Anspruch 3, dadurch gekennzeichnet, daß der Polarisator jeweils aus einer Polarisationsfolie besteht.

**Claims**

1. Optoelectronic position measuring instrument for measuring the relative position of two objects, in which the graduation support (M) connected to one of the objects has an incremental graduation (T1; T2) and at least one of these graduations (T1; T2) is firmly allocated reference marks (R1a, R1b, R1c; R2b) and in which a scanning unit (A) which is connected to the other object scans the graduation (T1; T2) for producing measuring values for the position of the two objects and at least the one reference mark (R1a, R1b, R1c; R2b) for producing at least one reference signal (Rs1; Rs2) for control purposes, characterised in that at least the one reference mark (R1a, R1b, R1c;

R2b) is constructed as a polarizer with a given polarisation effect and that at least the one reference mark (R1a, rib, R1c; R2b) can be detected by this given polarisation effect.

2. Measuring device according to claim 1, characterised in that the strips of the reference marks (R1a, R1b, R1c) are formed by the strips of the incremental graduation (T1), that the strips of the reference mark (R1a, R1b, R1c) and the strips of a reference scan graduation (RAT1), which is identical with the reference marks (R1a, R1b, R1c), have the given polarisation effect and the strips of the incremental graduation (T1) not used for the reference marks (R1a, R1b, R1c) have a different polarisation effect.

3. Measuring device according to claim 1, characterised in that the reference marks (R2a, R2b, R2c) are arranged on a reference mark track running parallel to the incremental division (T2), that the strips of a selected reference mark (R2b) and the strips of a reference scan graduation (RAT2), which is identical with the reference marks (R2a, R2b, R2c), have the given polarisation effect and the strips of the non-selected reference marks (R2a, R2c) have a different polarisation effect.

4. Measuring device according to the claims 2 and 3, characterised in that the polariser consists of a linear pattern respectively.

5. Measuring device according to claim 3, characterised in that the polariser consist of a polarisation film respectively.

**Revendications**

1. Dispositif de mesure de position photo-électrique pour la mesure de la position relative de deux objets, dans lequel un support de graduation (M) lié à l'un des objets porte une graduation (T1; T2) incrémentale et au moins un repère de référence (R1a, R1b, R1c; R2b) fixe associé à ladite graduation (T1; T2) et dans lequel une unité de lecture (A) liée à l'autre objet lit la graduation (T1, T2) pour produire des valeurs de mesure pour la position des deux objets et au moins l'un des repères de référence (R1a, R1b, R1c; R2b) pour produire au moins un signal de référence (RS1, RS2) à des fins de commande, caractérisé par le fait que le repère de référence (R1a, R1b, R1c; R2b), au nombre d'au moins un, est agencé sous forme de polarisateur dont l'effet de polarisation peut être prédéterminé et que le repère de référence (R1a, R1b, R1c, R2b), au nombre d'au moins un, est détecté grâce à cet effet de polarisation.

2. Dispositif de mesure selon la revendication 1, caractérisé par le fait que les bandes des repères de référence (R1a, R1b, R1c) sont formées par les bandes de la graduation (T1) incrémentale, que les bandes des repères de référence (R1a, R1b, R1c) et les bandes d'une graduation de lecture de référence (RAT1) qui sont identiques aux repères de référence (R1a, R1b, R1c) ont l'effet de polarisation prédéterminé et les bandes de la graduation (T1) incrémentale non utilisées pour les repères de référence (R1a, R1b, R1c) possèdent un effet de polarisation différent.

3. Dispositif de mesure selon la revendication 1, caractérisé par le fait que les repères de référence (R2a, R2b, R2c) sont agencées en une piste de repères de référence qui est parallèle à la graduation (T2) incrémentale, que les bandes d'un repère de référence (R2b) sélectionné et les bandes d'une graduation de lecture de référence (RAT2) qui sont identiques aux repères de référence (R2a, R2b, R2c) ont l'effet de polarisation prédéterminé et les bandes des repères de référence (R2a, R2c) non sélectionnés possèdent un effet de polarisation différent.

4. Dispositif de mesure selon les revendications 2 et 3, caractérisé par le fait que le polarisateur est constitué chaque fois par un motif de traits.

5. Dispositif de mesure selon la revendication 3, caractérisé par le fait que le polarisateur est constitué chaque fois par un film polarisateur.

FIG. 1

A · L · K · M · X · AP · PP · Sa · Sb · RS · TS · Ua · Ub · UR · AW · AZ

6

FIG. 2

EP 0 421 024 B1

# FIG. 3